# EUROPÄISCHE PATENTSCHRIFT

(11) **EP 3 164 609 B1**
(45) Veröffentlichungstag und Bekanntmachung des Hinweises auf die Patenterteilung: **28.08.2019**
(21) Anmeldenummer: 14799671.4
(22) Anmeldetag: 12.11.2014
(51) Int. Cl.: F15B 15/14

(54) **KOLBEN UND DAMIT AUSGESTATTETE STELLVORRICHTUNG**
PISTON AND CONTROL DEVICE EQUIPPED THEREWITH
PISTON ET DISPOSITIF DE CONTROLE ÉQUIPÉ DE CELUI-CI

(43) Veröffentlichungstag der Anmeldung: 10.05.2017
(73) Patentinhaber: Festo AG & Co. KG, 73734 Esslingen (DE)
(72) Erfinder: BESELER, Jörg, 72108 Rottenburg (DE); REICHERT, Klaus, 71144 Steinenbronn (DE); KLESMANN, Daniela, 72636 Frickenhausen (DE)
(74) Vertreter: Patentanwälte Magenbauer & Kollegen Partnerschaft mbB
(86) Internationale Anmeldenummer: PCT/EP2014/003033
(87) Internationale Veröffentlichungsnummer: WO 2016/074690

(56) Entgegenhaltungen:
- EP-A2- 1 164 316
- WO-A1-2013/083240
- DE-B1- 2 947 516
- DE-U1-202005 005 508

## Beschreibung

Die Erfindung betrifft einen Kolben für eine mit Fluid betreibbare Stellvorrichtung, insbesondere für einen fluidbetätigten Linearantrieb, mit einem einstückig ausgebildeten Kolbenkörper, der im Bereich seines radialen Außenumfanges eine zu Längsachse des Kolbens koaxiale ringförmige Haltevertiefung mit zwei einander zugewandten seitlichen Vertiefungsflanken aufweist, in der ein eine Ringstruktur aufweisendes Führungsband gehalten ist, das zwei in der Umfangsrichtung der Haltevertiefung einander zugewandte Bandendabschnitte aufweist. Die Erfindung betrifft ferner eine mit Fluid betreibbare Stellvorrichtung, insbesondere einen fluidbetätigten Linearantrieb, der über ein Gehäuse verfügt, in dem ein Kolben der vorgenannten Art linear verschiebbar angeordnet ist.

Eine mit einem Kolben der vorgenannten Art ausgestattete Stellvorrichtung ist aus der DE 20 2005 005 508 U1 bekannt und ist beispielsweise als Linearantrieb oder Stoßdämpfer ausgebildet. Während des Betriebes der Stellvorrichtung bewegt sich der Kolben relativ zu einem Gehäuse der Stellvorrichtung, wobei die in den Kolben integrierte Permanentmagnetanordnung nutzbar ist, um durch Zusammenwirken mit externen Positionserfassungsmitteln eine Positionserfassung des Kolbens zu ermöglichen. Um den Kolben kostengünstig herstellen zu können, enthält er einen einstückigen Kolbenkörper mit einer peripheren Aufnahmenut, in die die Permanentmagnetanordnung eingesetzt ist. Letztere besteht aus mehreren bogenförmigen Magnetsegmenten, die beim Zusammenbau des Kolbens von radial außen her in die Aufnahmenut eingesetzt werden. Die Herstellung und die Montage der Magnetsegmente ist allerdings relativ aufwendig.

Der in der vorgenannten DE 20 2005 005 508 U1 beschriebene Kolben ist zusätzlich mit einem eine Ringstruktur aufweisenden Führungsband ausgestattet, das in eine am Außenumfang des Kolbenkörpers ausgebildete ringförmige Haltevertiefung eingesetzt ist. Das Führungsband ist als ein hohlzylindrischer Führungsring ausgebildet, der an einer Stelle seines Umfanges unterbrochen ist, sodass er aufgrund seiner Elastizität bei der Montage vorübergehend aufgeweitet werden kann. Die radiale Außenfläche des Führungsbandes definiert eine Führungsfläche, die gleitverschieblich an der Innenumfangsfläche des den Kolben aufnehmenden Gehäuses anliegt, sodass der Kolben relativ zu dem Gehäuse eine präzise geführte Linearbewegung ausführen kann.

Aus der DE 19715858 A1 ist ein Kolben für einen Arbeitszylinder bekannt, der zur Positionserfassung mit einem ringförmigen Permanentmagnet ausgestattet ist. Um die Montage dieses Ringmagneten zu ermöglichen, ist ein mehrteiliger Aufbau des Kolbenkörpers vorgesehen. Der Kolbenkörper besteht aus zwei unter Bildung der Aufnahmenut aneinander angesetzten Kolbenelementen, die im Bereich der Aufnahmenut mit einem Elastomermaterial beschichtet sind, um den Permanentmagnet einzuspannen und auf schonende Weise zu fixieren.

Die EP 0 307 569 A2 beschreibt ein Kolben-Zylinder-Aggregat, dessen Kolben über einen einstückigen Kolbenkörper verfügt, auf den peripher ein an einer Stelle seines Umfanges unterbrochenes Führungsband aufgesetzt ist. Das Führungsband hat federelastische Eigenschaften und ist in eine am Außenumfang des Kolbenkörpers ausgebildete Ringnut federähnlich eingeschnappt. Um eine Positionserfassung des Kolbens zu ermöglichen, verfügt der Kolbenkörper an einer Stelle seines Außenumfanges über eine Vertiefung, in die ein Permanentmagnetstück eingesetzt ist, das von dem Führungsband abgedeckt wird.

Aus der WO 2013/083240 A1 ist ein Kolben bekannt, der eine Kolbennut aufweist, in der ein Dichtring angeordnet ist. An den Nutflanken ist jeweils ein Positioniervorsprung angeordnet, an dem der Dichtring anliegt.

Die DE 29 47 516 B1 beschreibt einen Kolben mit einem zweiteiligen Kolbenkörper, in dem eine Kolbendichtung gehalten ist. Die beiden Kolbenkörper haben jeweils eine Ringrippe, die in eine komplementäre Kreisnut der Kolbendichtung eingreift.

Der Erfindung liegt die Aufgabe zugrunde, Maßnahmen zu treffen, die eine kostengünstige Ausstattung eines Kolbens mit einem zu seiner Linearführung dienenden Führungsband ermöglichen.

Zur Lösung dieser Aufgabe ist bei einem Kolben der eingangs genannten Art vorgesehen, dass die beiden Vertiefungsflanken der Haltevertiefung im Querschnitt betrachtet jeweils eine hinterschnittene Profilierung haben, wobei sie jeweils mit radialem Abstand zum Vertiefungsgrund der Haltevertiefung einen in Richtung zur gegenüberliegenden Vertiefungsflanke ragenden ringförmigen Haltevorsprung aufweisen, der formschlüssig mit dem zugewandten Seitenrand des Führungsbandes in Eingriff steht, wobei das Führungsband ein linear gefertigter, bei seiner anschließenden Montage am Kolbenkörper zu einer Ringform gebogener Strangkörper ist.

Die Aufgabe wird ferner bei einer mit Fluid betreibbaren Stellvorrichtung der eingangs genannten Art dadurch gelöst, dass sie mit einem in dem vorgenannten Sinne ausgebildeten Kolben ausgestattet ist.

Auf diese Weise wird das Führungsband in der Haltevertiefung des Kolbenkörpers sicher festgehalten, obgleich die Ringstruktur des Führungsbandes nicht in sich geschlossen ist und zwischen den beiden einander zugewandten Bandendabschnitten eine Unterbrechung aufweist. Das Führungsband lässt sich bei seiner Montage um den Kolbenkörper herumlegen und mit leichtem Druck in die Haltevertiefung einsetzen. Dabei wird das Führungsband elastisch gebogen. Die hinterschnittene Profilierung der beiden Vertiefungsflanken der Haltevertiefung sorgt für einen formschlüssigen Eingriff der Vertiefungsflanken mit dem jeweils zugewandten Seitenrand des Führungsbandes, sodass selbiges trotz des Umstandes, dass es unter einer gewissen elastischen Vorspannung steht, nicht mehr aus der Haltevertiefung herausschnappen kann. Ein großer Vorteil der formschlüssigen Fixierung des Führungsbandes in der Haltevertiefung besteht darin, dass das Führungsband nach dem Einlegen in die Haltevertiefung nicht mehr händisch oder mittels einer Hilfsvorrichtung festgehalten werden muss, um den Kolben in das Gehäuse einer zugeordneten Stellvorrichtung hineinschieben zu können. Durch den an beiden Vertiefungsflanken vorhandenen, umlaufenden wulstartigen Haltevorsprung ist das Führungsband zuverlässig gehalten. Es besteht sogar die Möglichkeit, die Montage des Führungsbandes bei Bedarf zu automatisieren und dadurch die Montagekosten noch weiter zu reduzieren.

Vorteilhafte Weiterbildungen der Erfindung gehen aus den Unteransprüchen hervor.

Erfindungsgemäß ist der die Haltevertiefung aufweisende Kolbenkörper einstückig ausgebildet. Der Kolbenkörper besteht insbesondere aus einem starren Material, beispielsweise aus Metall, aus Keramik, aus Glas oder aus einem harten Kunststoffmaterial.

Eine besonders kostengünstige Ausführung des Kolbens sieht vor, dass die Haltevorsprünge unter lokaler Verformung des Führungsbandes und unter Ausbildung eines formschlüssigen Eingriffes in den jeweils zugeordneten Seitenrand des Führungsbandes eingedrückt sind. In diesem Fall bedarf es keiner speziellen geometrischen Anpassung der Seitenränder des Führungsbandes an die Formgebung der profilierten Vertiefungsflanken, da die Haltevorsprünge in der Lage sind, in das bevorzugt elastisch nachgiebige Material des Führungsbandes einzudrücken und dadurch in der radialen Richtung des Kolbens einen Formschluss auszubilden. Insbesondere in diesem Zusammenhang ist es vorteilhaft, wenn das Führungsband im noch nicht in der Haltevertiefung montierten Ausgangszustand einen rechteckigen Querschnitt hat. Ein Vorteil der Erfindung besteht darin, dass das Führungsband mit einer geringen radialen Dicke ausgeführt werden kann und sich dementsprechend sehr einfach in die gewünschte Ringform biegen lässt.

Es besteht auch die Möglichkeit, das Führungsband in der Haltevertiefung zu verrasten beziehungsweise in die Haltevertiefung einzuclipsen. In diesem Fall ist es vorteilhaft, wenn das Führungsband an seinen beiden Seitenrändern jeweils eine vorgefertigte Eingriffskontur hat, mit der der zugeordnete Haltevorsprung formschlüssig in Eingriff bringbar ist, wenn das Führungsband von radial außen her in die Haltevertiefung hineingedrückt wird.

Das Führungsband verfügt zweckmäßigerweise insgesamt über elastisch verformbare Eigenschaften. Erfindungsgemäß handelt es sich bei dem Führungsband um einen zu der gewünschten Ringform gebogenen elastischen Strangkörper.

Es ist von Vorteil, wenn der Kolben zusätzlich zu dem Führungsband mit einer insbesondere zur Positionserfassung des Kolbens nutzbaren Permanentmagnetanordnung ausgestattet ist. Diese Permanentmagnetanordnung ist ringförmig strukturiert und wie das Führungsband koaxial an dem Kolbenkörper angeordnet.

Die ringförmig strukturierte Permanentmagnetanordnung ist zweckmäßigerweise in einer Aufnahmenut aufgenommen, die derart in dem Kolbenkörper ausgebildet ist, dass sie von der ringförmigen Haltevertiefung für das Führungsband radial außen konzentrisch umschlossen ist. Dabei hat die Haltevertiefung zweckmäßigerweise eine größere axiale Breite als die Aufnahmenut, sodass das in der Haltevertiefung angeordnete Führungsband das Magnetband umschließt und radial außen abdeckt.

Die ringförmig strukturierte Permanentmagnetanordnung besteht zweckmäßigerweise aus einem zu der Ringstruktur gebogenen elastischen permanent magnetischen Magnetband, das von radial außen her in die über zwei einander zugewandte seitliche Nutflanken verfügende ringförmige Aufnahmenut eingesetzt wurde. Das Magnetband hat zweckmäßigerweise zwei in der Umfangsrichtung der Aufnahmenut einander zugewandte Bandendabschnitte und verfügt über eine Breite, die geringer ist als der Abstand zwischen den beiden Nutflanken der Aufnahmenut. Die Aufnahmenut verfügt in mindestens einem Klemmbereich über zwei in der Umfangsrichtung der Aufnahmenut zueinander benachbarte Klemmzonen, in denen jeweils einer der beiden Bandendabschnitte des Magnetbandes durch Klemmung fixiert ist. Jede Klemmzone weist mindestens einen bezüglich einer der Nutflanken vorstehenden Klemmvorsprung auf, der eine lokale Verengung der Aufnahmenut bewirkt und die Seitenfläche des Magnetbandes beaufschlagt, sodass selbiges kraftschlüssig in der Aufnahmenut gehalten ist.

Vorzugsweise verfügt der Kolbenkörper in jeder Klemmzone der Aufnahmenut über mehrere, in der Umfangsrichtung der Aufnahmenut mit Abstand zueinander angeordnete Klemmvorsprünge, die alle eine Klemmkraft auf den zugeordneten Bandendabschnitt ausüben.

Als besonders vorteilhaft wird eine Ausführungsform angesehen, bei der in jeder Klemmzone wenigstens zwei und zweckmä-ßigerweise genau zwei in der Umfangsrichtung der Aufnahmenut mit Abstand benachbart zueinander angeordnete Klemmvorsprünge vorhanden sind, die an unterschiedlichen Nutflanken angeordnet sind, wobei jedem dieser Klemmvorsprünge an der gegenüberliegenden Nutflanke kein Klemmvorsprung gegenüberliegt. Das Magnetband ist dadurch in jeder Klemmzone an einer oder mehreren Stellen zwischen jeweils einem Klemmvorsprung und dem gegenüberliegenden vorsprunglosen Bereich der Nutflanke eingeklemmt.

Der in die Klemmzone eingesetzte Bandendabschnitt schlängelt sich quasi unter mehrfacher Biegung an den Klemmvorsprüngen vorbei, wobei es von Vorteil ist, wenn in jeder Klemmzone der in der Längsrichtung des Kolbens gemessene projizierte lichte Abstand zwischen den beiden in der Umfangsrichtung der Aufnahmenut zueinander beabstandeten Klemmvorsprüngen kleiner ist als die Breite des Magnetbandes.

Für die Klemmvorsprünge sind unterschiedlichste Formgebungen möglich. Beispielsweise können die Klemmvorsprünge noppenförmig ausgebildet sein. Als besonders zweckmäßig wird eine rippenförmige Gestaltung mit länglicher Erstreckung angesehen, in Verbindung mit einer dahingehenden Ausrichtung, dass sich jeder Klemmvorsprung ausgehend vom Bereich des Nutgrundes in Richtung zur radialen Nutöffnung der Aufnahmenut erstreckt.

Das Einsetzen des Magnetbandes wird erleichtert, wenn die Klemmvorsprünge in ihrem der radialen Nutöffnung zugewandten Endbereich zur zugeordneten Nutflanke hin abgeschrägt sind. Auf diese Weise ergibt sich eine Querschnittserweiterung der Aufnahmenut zur radialen Nutöffnung hin.

Das Magnetband kann sehr einfach mit einem rechteckigen Querschnitt ausgeführt werden.

Nachfolgend wird die Erfindung anhand der beiliegenden Zeichnung näher erläutert. In dieser zeigen:
- Figur 1: einen Längsschnitt durch eine bevorzugte Ausführungsform der erfindungsgemäßen Stellvorrichtung, die mit einer ebenfalls vorteilhaften Ausführungsform des erfindungsgemäßen Kolbens bestückt ist,

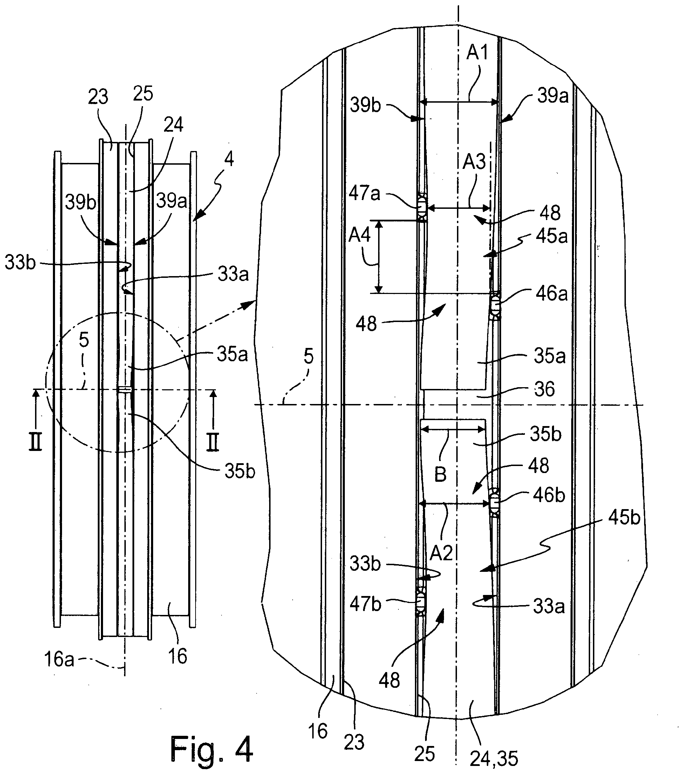

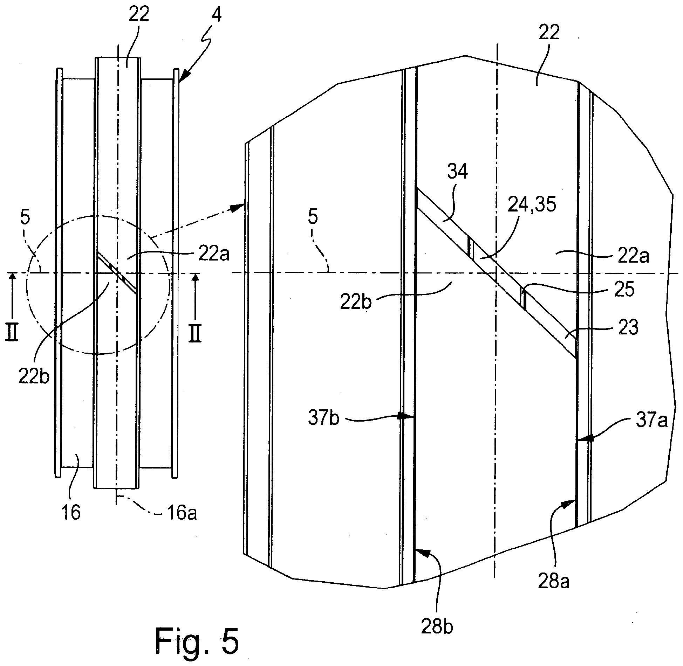

- Figur 2: den in Figur 1 strichpunktiert umrahmten Ausschnitt II des Kolbens in einer vergrößerten Darstellung, wobei die Schnittebene den in den Figuren 4 und 5 eingezeichneten Schnittlinien II-II entspricht,
- Figur 3: einen Querschnitt durch den Kolben gemäß Schnittlinie III-III aus Figur 1, wobei die übrigen Bestandteile der Stellvorrichtung nicht abgebildet sind und wobei sowohl das Führungsband als auch das Magnetband nur gestrichelt angedeutet sind,
- Figur 4: eine Seitenansicht des Kolbens mit Blick in der radialen Richtung gemäß Pfeil IV aus Figur 2, wobei der strichpunktiert umrahmte Ausschnitt zusätzlich vergrößert abgebildet ist und wobei das Führungsband der besseren Übersichtlichkeit wegen nicht gezeigt ist, und
- Figur 5: in einer der Figur 4 entsprechenden Darstellungsweise eine weitere radiale Ansicht des Kolbens mit Blickrichtung gemäß Pfeil IV, wobei hier das Führungsband im montierten Zustand gezeigt ist.

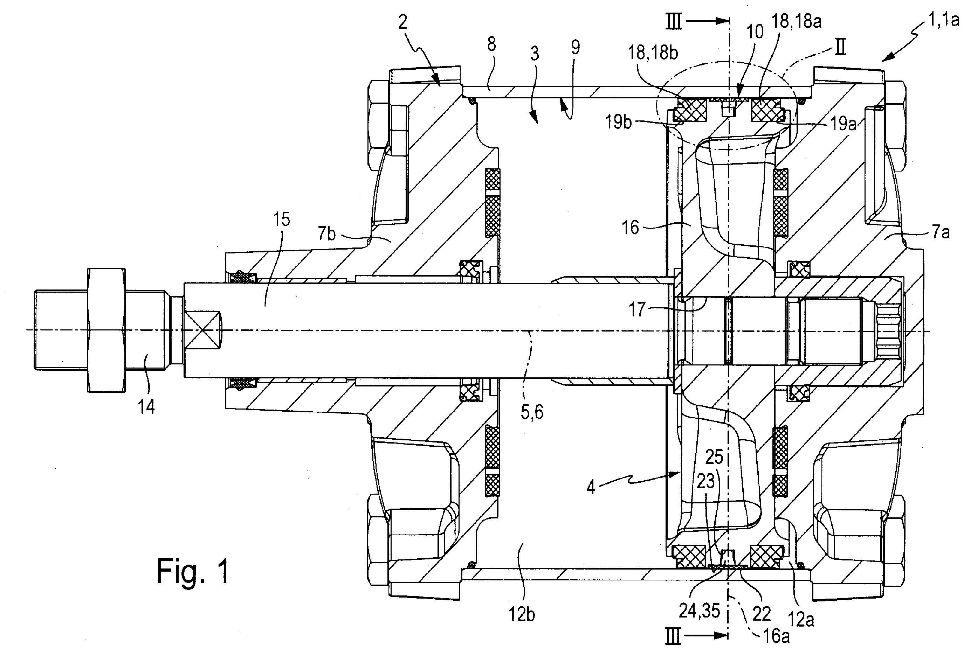

Die Figur 1 zeigt im Längsschnitt eine mit Fluid betreibbare Stellvorrichtung 1 in einer Ausführungsform als fluidbetätigter Linearantrieb 1a. Der Einsatzbereich der Erfindung beschränkt sich allerdings nicht auf Linearantriebe, sondern erstreckt sich auch auf alle anderen Arten von im Zusammenhang mit Fluidanwendungen einsetzbaren Stellvorrichtungen, so beispielsweise auch zur Verwendung bei Stoßdämpfern.

Die Stellvorrichtung 1 verfügt über ein Gehäuse 2, das eine sich linear erstreckende und vorzugsweise einen kreisförmigen Querschnitt aufweisende Gehäusekammer 3 definiert, in der ein Kolben 4 linear hin und her verschiebbar angeordnet ist. Die Längsachse 5 des Kolbens 4 verläuft in der Bewegungsrichtung des Kolbens 4 und fällt vorzugsweise mit der Längsachse 6 der Gehäusekammer 3 zusammen.

Die Gehäusekammer 3 ist an beiden Stirnseiten durch je eine Abschlusswand 7a, 7b des Gehäuses 2 verschlossen. Die periphere, radial äußere Begrenzung der Gehäusekammer 3 übernimmt ein sich zwischen den beiden Abschlusswänden 7a, 7b erstreckender ein- oder mehrteiliger Rohrkörper 8, dessen Innenfläche eine zylindrische Kolbenlauffläche 9 definiert. Die Abschlusswände 7a, 7b sind zweckmäßigerweise als bezüglich des Rohrkörpers 8 gesonderte Gehäusedeckel ausgebildet und durch Befestigungsmittel mit dem Rohrkörper 8 verbunden. Es besteht aber auch die Möglichkeit, mindestens eine der Abschlusswände 7a, 7b einstückig mit dem Rohrkörper 8 auszubilden.

Die radiale Außenkontur des Kolbens 4 ist an die Innenkontur der Gehäusekammer 3 angepasst, sodass er bei seiner Linearbewegung an der Kolbenlauffläche 9 entlanggleitet. Vorzugsweise ist der Kolben 4 an seinem radial orientierten Außenumfang mit einer bevorzugt zylindrischen Führungsfläche 10 ausgestattet, die gleitverschieblich an der Kolbenlauffläche 9 anliegt, sodass der Kolben 4 bei seiner Linearbewegung durch das Zusammenwirken zwischen der Führungsfläche 10 und der Kolbenlauffläche 9 eine Linearführung bezüglich des Gehäuses 2 erfährt.

Durch den Kolben 4 wird die Gehäusekammer 3 axial in zwei Arbeitsräume 12a, 12b unterteilt, in die jeweils ein außerhalb der Schnittebene der Figur 1 liegender Fluidkanal einmündet, sodass eine gesteuerte Fluidbeaufschlagung der beiden Arbeitsräume 12a, 12b möglich ist. Auf diese Weise kann der Kolben 4 zu einer Linearbewegung relativ zum Gehäuse 2 in Achsrichtung der Längsachse 6 angetrieben werden.

Bei dem für den Betrieb der Stellvorrichtung 1 verwendeten Fluid handelt es sich vorzugsweise um Druckluft. Allerdings ist auch der Einsatz eines anderen gasförmigen Mediums oder eines hydraulischen Mediums möglich.

Die Linearbewegung des Kolbens 4 lässt sich außerhalb des Gehäuses 2 an einem mit dem Kolben 4 bewegungsgekoppelten Kraftabgriffsteil 14 abgreifen. Letzteres ist beim Ausführungsbeispiel eine Kolbenstange 15, die mindestens eine der Abschlusswände 7b unter Abdichtung gleitverschieblich durchsetzt und die mit ihrem innerhalb der Gehäusekammer 3 liegenden Abschnitt an dem Kolben 4 befestigt ist. Der Kolben 4 und die Kolbenstange 5 bilden mithin eine Bewegungseinheit.

Bei einem nicht gezeigten Ausführungsbeispiel ist der Linearantrieb 1a ein kolbenstangenloser Linearantrieb, bei dem der Kolben 4 beispielsweise magnetisch mit einem außerhalb des Gehäuses 2 verschiebbar gelagerten Kraftabgriffsteil bewegungsgekoppelt ist.

Der Kolben 4 verfügt über einen bevorzugt scheibenförmigen Kolbenkörper 16. Der Kolbenkörper 16 hat eine zur Längsachse 5 des Kolbens 4 rechtwinkelige Kolbenkörper-Radialebene 16a. Über den Kolbenkörper 16 ist der Kolben 4 beim Ausführungsbeispiel an der Kolbenstange 15 befestigt. Exemplarisch ist der Kolbenkörper 16 kreisscheibenförmig ausgebildet und ist von einem zentralen Befestigungsloch 17 durchsetzt, mit dem er auf die Kolbenstange 15 aufgesteckt ist.

Der Kolbenkörper 16 ist zweckmäßigerweise ein einstückiges Bauteil. Er besteht vorzugsweise aus einem starren Material und ist beim Ausführungsbeispiel aus Metall, insbesondere aus Aluminiumdruckguss gefertigt. Als alternative Materialien für den Kolbenkörper 16 können beispielsweise Keramik, Glas oder Hartkunststoff erwähnt werden, wobei auch Verbundmaterialien möglich sind.

Der Kolbenkörper 16 trägt im Bereich seines Außenumfanges zu der Längsachse 5 konzentrische Dichtungsmittel 18, die im in die Stellvorrichtung 1 eingebauten Zustand des Kolbens 4 an der Kolbenlauffläche 9 gleitverschieblich anliegen. Sie verhindern einen Fluidübertritt zwischen den beiden Arbeitsräumen 12a, 12b. Exemplarisch bestehen die Dichtungsmittel 18 aus zwei Dichtungsringen 18a, 18b, die mit axialem Abstand zueinander am Kolbenkörper 16 fixiert sind. Vorzugsweise ist jeder Dichtungsring 18a, 18b in einer nach radial außen offenen Befestigungsnut 19a, 19b gehalten, die in dem Kolbenkörper 16 an dessen radialem Außenumfang ausgebildet sind. Jede Befestigungsnut 19a, 19b ist koaxial zu der Längsachse 5 angeordnet.

Die Führungsfläche 10 ist zweckmäßigerweise von der radial nach außen orientierten Außenumfangsfläche eines eine Ringstruktur aufweisenden Führungsbandes 22 gebildet, das im Bereich des radialen Außenumfanges an dem Kolbenkörper 16 fixiert ist. Der Kolbenkörper 16 verfügt im Bereich seines radialen Außenumfanges über eine zu der Längsachse 5 koaxiale ringförmige Haltevertiefung 23, in die das Führungsband 22 radial eintaucht und in der das Führungsband 22 gehalten ist.

Zweckmäßigerweise ist der Kolben 4 mit einer Permanentmagnetanordnung 24 ausgestattet, die zur Positionserfassung des Kolbens 4 nutzbar ist. Die Permanentmagnetanordnung 24 ist ortsfest am Kolben 4 fixiert und macht dessen Linearbewegung mit. Mit Hilfe von neben der Bewegungsbahn der Permanentmagnetanordnung 24 und dabei insbesondere außerhalb der Gehäusekammer 3 angeordneten, in der Zeichnung nicht weiter abgebildeten Positionserfassungsmitteln, die auf das Magnetfeld der Permanentmagnetanordnung 24 ansprechen, lässt sich im Betrieb der Stellvorrichtung 1 die aktuelle Axialposition des die Permanentmagnetanordnung 24 tragenden Kolbens 4 bestimmen. Die Positionserfassungsmittel enthalten beispielsweise einen oder mehrere Sensoren, beispielsweise Hall-Sensoren, und/oder sie gehören zu einem Wegmesssystem.

Die Permanentmagnetanordnung 24 hat zweckmäßigerweise eine ringförmige Struktur und ist koaxial zur Längsachse 5 am Kolbenkörper 16 angeordnet.

In Kombination mit mindestens einem Führungsband 22 wäre es bei entsprechender Ausgestaltung des Kolbenkörpers 16 möglich, das Führungsband 22 und die Permanentmagnetanordnung 24 axial nebeneinander am Kolbenkörper 16 anzubringen. Zu Gunsten einer schmalen Bauweise des Kolbens 4 ist es jedoch vorteilhaft, wenn die Permanentmagnetanordnung 24 auf gleicher axialer Höhe mit dem Führungsband 22 angeordnet ist, und zwar in einer Weise, dass die Permanentmagnetanordnung 24 von dem Führungsband 22 konzentrisch umschlossen ist. Letzteres trifft auf das Ausführungsbeispiel zu.

Beim Ausführungsbeispiel ist die Permanentmagnetanordnung 24 in einer im Bereich des radialen Außenumfanges des Kolbenkörpers 16 ausgebildeten ringförmigen Aufnahmenut 25 des Kolbenkörpers 16 aufgenommen. Diese Aufnahmenut 25 hat eine nach radial außen orientierte, sich rings um den Kolbenkörper 16 herum erstreckende schlitzförmige Nutöffnung 26, die in der axialen Richtung des Kolbens 4 schmäler ist als die Haltevertiefung 23. Die Aufnahmenut 25 ist von der Haltevertiefung 23 radial außen umschlossen, wobei sie mit ihrer Nutöffnung 26 in den Vertiefungsgrund 27 der Haltevertiefung 23 einmündet. Bei dem Vertiefungsgrund 27 handelt es sich um die radiale Grundfläche der Haltevertiefung 23.

Vorzugsweise mündet die radial orientierte Nutöffnung 26 der Aufnahmenut 25 im axial mittigen Bereich in die Haltevertiefung 23 ein. Auf diese Weise schließt sich axial beidseits der Nutöffnung 26 jeweils ein ringförmiger Vertiefungsgrundabschnitt 27a, 27b an, der vorzugsweise zylindrisch konturiert ist.

Das in der Haltevertiefung 23 angeordnete Führungsband 22 überdeckt die Nutöffnung 26 und folglich auch die in der Aufnahmenut 25 angeordnete Permanentmagnetanordnung 24.

Die Haltevertiefung 23 für das Führungsband 22 hat zwei in Achsrichtung der Längsachse 5 des Kolbens 4 zueinander beabstandete und einander zugewandte seitliche Vertiefungsflanken 28a, 28b. Jede dieser Vertiefungsflanken 28 schließt sich an den Vertiefungsgrund 27 an, wobei exemplarisch jede Vertiefungsflanke 28a, 28b in einen der beiden Vertiefungsgrundabschnitte 27a, 27b übergeht. Die Haltevertiefung 23 ist an der dem Vertiefungsgrund 27 entgegengesetzten Radialseite, also radial außen, offen.

Die Aufnahmenut 25 für die Permanentmagnetanordnung 24 hat eine als Nutgrund 32 bezeichnete, nach radial außen weisende Nutgrundfläche, der die Nutöffnung 26 radial außen gegenüberliegt.

Der Durchmesser des Nutgrundes 32 ist kleiner als der Durchmesser des Vertiefungsgrundes 27.

Die Aufnahmenut 25 hat zwei in Achsrichtung der Längsachse 5 zueinander beabstandete und zugleich einander zugewandte seitliche Nutflanken 33a, 33b, die im Folgenden zur besseren Unterscheidung auch als erste Nutflanke 33a und zweite Nutflanke 33b bezeichnet seien. Die beiden Nutflanken 33a, 33b gehen beim Ausführungsbeispiel radial innen in den Vertiefungsgrund 27 der Haltevertiefung 23 über. Der lichte Abstand zwischen den beiden Nutflanken 33a, 33b ist kleiner als der lichte Abstand zwischen den beiden Vertiefungsflanken 28a, 28b. Die Aufnahmenut 25 hat vorzugsweise einen zumindest im Wesentlichen rechteckigen Querschnitt.

Das Führungsband 22 hat im in der Haltevertiefung 23 fixierten Zustand eine Ringstruktur. Die Ringstruktur ist allerdings nicht komplett in sich geschlossen, sondern verfügt über eine Unterbrechung 34. Bevorzugt handelt es sich bei dem Führungsband 22 um einen Strangkörper mit endlicher Länge, der über zwei einander entgegengesetzte Bandendabschnitte 22a, 22b verfügt. Das Führungsband wird als ein linearer Strangkörper gefertigt, der erst anschließend, bei der Montage am Kolbenkörper 16, zu der Ringform gebogen wird. Dies wird dadurch begünstigt, dass das Führungsband 22 über elastisch verformbare Eigenschaften verfügt.

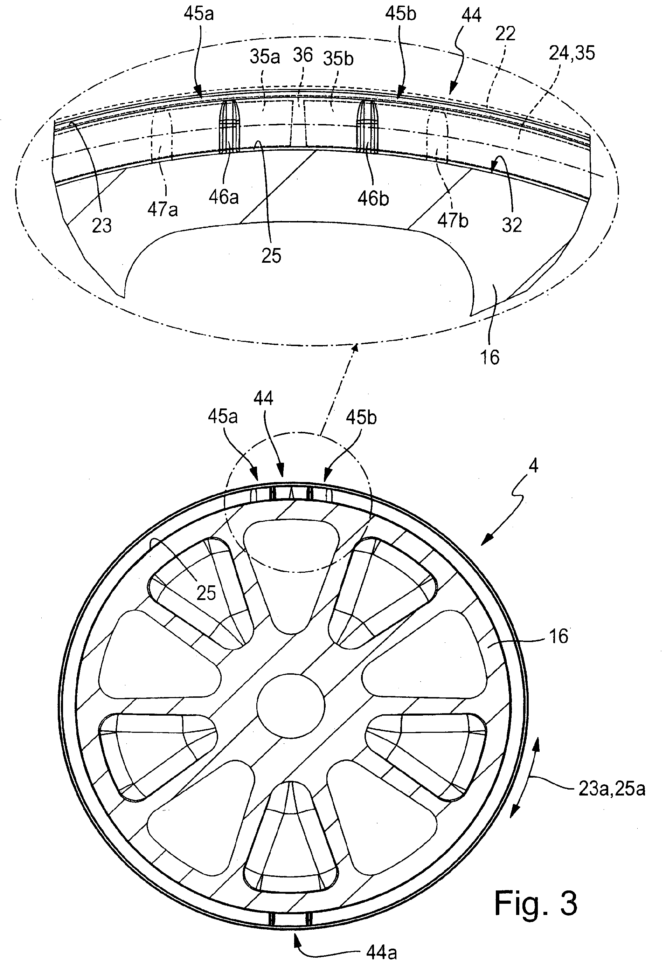

Im montierten Zustand ist das Führungsband 22 koaxial um den Kolbenkörper 16 herumgeschlungen und in die Haltevertiefung 23 eingesetzt, wobei seine beiden Bandendabschnitte 22a, 22b einander in der Umfangsrichtung 23a der Haltevertiefung 23 zugewandt sind. Die Umfangsrichtung 23a der Haltevertiefung 23 ist die Richtung um die Längsachse 5 herum und ist in Figur 3 durch einen Doppelpfeil angedeutet.

Zweckmäßigerweise liegt zwischen den beiden Bandendabschnitten 22a, 22b ein zumindest kleiner, die Unterbrechung 34 definierender Abstand vor.

Die einander in der Umfangsrichtung der Haltevertiefung 23 zugewandten Stirnflächen des Führungsbandes 22 sind vorzugsweise über die gesamte Breite des Führungsbandes 22 hinweg abgeschrägt. Dabei verlaufen die einander zugewandten abgeschrägten Stirnflächen der beiden Bandendabschnitte 22a, 22b vorzugsweise parallel zueinander.

Die Permanentmagnetanordnung 24 besteht vorzugsweise aus einem zu einer Ringstruktur gebogenen elastischen permanentmagnetischen Magnetband 35. Das Magnetband 35 hat zweckmäßigerweise eine endliche Länge und verfügt über zwei einander entgegengesetzte Bandendabschnitte 35a, 35b. Bevorzugt wird das Magnetband 35 als ein linearer Strangkörper gefertigt, der zu der Ringstruktur gebogen wird, wenn er in der Aufnahmenut 25 montiert wird. Das Magnetband 35 wird also bei seiner Montage am Kolbenkörper 16 zweckmäßigerweise unter gleichzeitigem radialem Einführen in die Aufnahmenut 25 um den Kolbenkörper 16 herumgebogen. Diese Art der Montage entspricht zweckmäßigerweise derjenigen des Führungsbandes 22.

Diese Art der Montage wird dadurch begünstigt, dass das Magnetband 35 über elastisch verformbare Eigenschaften verfügt.

Vorzugsweise besteht es aus einem strangförmigen Bandkörper aus einem elastisch verformbaren Kunststoffmaterial, der mit Permanentmagnetmitteln versehen ist, die für die permanentmagnetischen Eigenschaften des Magnetbandes 35 verantwortlich sind. Bei den Permanentmagnetmitteln handelt es sich beispielsweise um ferromagnetische Partikel, die bei der Herstellung des Magnetbandes in den strangförmigen Bandkörper in feiner Verteilung eingebettet und anschließend magnetisiert werden.

Wenn das Magnetband 35 gebrauchsfertig in die Aufnahmenut 25 eingelegt ist, sind die beiden Bandendabschnitte 35a, 35b einander in der Umfangsrichtung 25a der Aufnahmenut 25 zugewandt. Die Umfangsrichtung 25a der Aufnahmenut 25 ist die Richtung um die Längsachse 5 herum und ist in Figur 3 durch einen Doppelpfeil angedeutet. Zwischen den beiden Bandendabschnitten 35a, 35b befindet sich eine Unterbrechung 36 der Ringstruktur des Magnetbandes 35, die sich insbesondere in einem kleinen Zwischenraum äußert, sodass sich die beiden Bandendabschnitte 35a, 35b in der Umfangsrichtung 25a der Aufnahmenut 25 mit einem geringen Abstand gegenüberliegen. Die Umfangsrichtung 25a der Aufnahmenut 25 ist die Richtung rings um die Längsachse 5 des Kolbens 4 herum.

Das Magnetband 35 hat zwei längsseitige Seitenflächen 39a, 39b, die im in der Aufnahmenut 25 montierten Zustand jeweils einer der Nutflanken 33a, 33b zugewandt sind.

Obgleich das Führungsband 22 im in die Haltevertiefung 23 eingelegten Zustand aufgrund seiner federelastischen Eigenschaften die Tendenz hat, im Bereich der beiden Bandendabschnitte 22a, 22b aufzuklappen und sich aus der Haltevertiefung 23 zu lösen, wird das Führungsband 22 aufgrund zweckmäßiger Fixierungsmaßnahmen allein durch den Kolbenkörper 16 zusammengehalten, sodass es seine Ringstruktur beibehält, in der es über seine gesamte Länge hinweg in der Haltevertiefung 23 fixiert ist.

Entsprechendes gilt zweckmäßigerweise für das Magnetband 35 in Bezug auf die Aufnahmenut 25. Der Kolbenkörper 16 ist im Bereich der Aufnahmenut 25 so ausgebildet, dass- er das in die Aufnahmenut 25 eingelegte Magnetband 35 so festhält, dass es trotz der auf seiner Elastizität basierenden Aufweitungstendenz über seine volle Länge hinweg in der Aufnahmenut 25 angeordnet ist und im Bereich der beiden Bandendabschnitte 35a, 35b nicht aufklappt.

Der vorliegend beschriebene Effekt wird bei dem Führungsband 22 dadurch erzielt, dass die beiden Vertiefungsflanken 28a, 28b der Haltevertiefung 23 im Querschnitt betrachtet jeweils eine hinterschnittene Profilierung haben, sodass jede Vertiefungsflanke 28a, 28b formschlüssig mit dem jeweils zugewandten Seitenrand 37a, 37b der beiden in Achsrichtung der Längsachse 5 orientierten Seitenränder 37a, 37b des Führungsbandes 22 in Eingriff steht. Der Formschluss wirkt in bezüglich der Längsachse 5 radialer Richtung, sodass das Führungsband 22 durch die profilierten Vertiefungsflanken 28a, 28b über seine gesamte Länge hinweg in der Haltevertiefung 23 festgehalten wird. Es handelt sich zweckmäßigerweise um einen lösbaren formschlüssigen Eingriff, um im Bedarfsfalle einen Austausch des Führungsbandes zu ermöglichen.

Die hinterschnittene Profilierung der Vertiefungsflanken 28a, 28b äußert sich pro Vertiefungsflanke 28a, 28b insbesondere in einem in Richtung zur jeweils gegenüberliegenden Vertiefungsflanke 28b, 28a ragenden Haltevorsprung 38a, 38b, der konzentrisch zur Längsachse 5 des Kolbens 4 angeordnet ist und sich ununterbrochen in der Umfangsrichtung 23a der Haltevertiefung 23 erstreckt. Jeder der beiden Haltevorsprünge 38a, 38b ist mit einem mit Bezug zur Längsachse 5 radialen Abstand zum Vertiefungsgrund 27 der Haltevertiefung 23 angeordnet, sodass sich in dem radial zwischen einem jeweiligen Haltevorsprung 38a, 38b und dem Vertiefungsgrund 27 liegenden Bereich einer jeweiligen Vertiefungsflanke 28a, 28b eine ringförmig in sich geschlossene Haltevertiefung 43a, 43b ergibt, in die das Führungsband 22 eingreifen kann und die auch konzentrisch zur Längsachse 5 des Kolbens 4 angeordnet ist.

Bevorzugt hat das Führungsband 22 im noch nicht in die Haltevertiefung 23 eingesetzten Ausgangszustand einen rechteckigen Querschnitt. Die Breite des Führungsbandes 22 ist in diesem Ausgangszustand etwas größer als der in Achsrichtung der Längsachse 5 gemessene lichte Abstand zwischen den sich gegenüberliegenden Haltevorsprüngen 38a, 38b. Auf diese Weise wird erreicht, dass die Haltevorsprünge 38a, 38b im in die Haltevertiefung 23 eingesetzten Zustand des Führungsbandes 22 unter lokaler Verformung des Führungsbandes 22 in den jeweils zugeordneten Seitenrand 37a, 37b eingedrückt sind. Das durch das Eindrücken verdrängte Material des Führungsbandes 22 greift in die Haltevertiefungen 43a, 43b ein. Auf diese Weise ergibt sich ein in der radialen Richtung des Kolbens 4 wirksamer Formschluss zwischen dem Kolbenkörper 16 und dem Führungsband 22, der dafür sorgt, dass das Führungsband 22 über seine gesamte Länge hinweg an beiden Seitenrändern 37a, 37b durch die hinterschnittene Profilierung der Vertiefungsflanken 28a, 28b festgehalten wird.

Bei der Montage des Führungsbandes 22 wird auf das Führungsband mit bezüglich der Längsachse 5 radialer Kraft eingewirkt, sodass es zwischen die beiden Haltevorsprünge 38a, 38b hineingedrückt und darin festgeklemmt wird.

Es besteht die Möglichkeit, die Formschlusswirkung zu intensivieren, indem das Führungsband 22 an seinen beiden Seitenrändern 37a, 37b über eine vorgeformte Eingriffskontur verfügt, die eine zu der profilierten Vertiefungsflanke 28a, 28b komplementäre Profilierung aufweist, sodass das Führungsband 22 über seine gesamte Länge hinweg in die Haltevertiefung 23 einrastbar beziehungsweise einclipsbar ist.

Zur Fixierung des Magnetbandes 35 kommt zweckmäßigerweise ein Klemmprinzip zum Einsatz, bei dem das Magnetband 35 nicht über seine gesamte Länge hinweg durch den Kolbenkörper 16 festgeklemmt wird, sondern nur in einigen Bereichen und dabei insbesondere an seinen beiden Bandendabschnitten 35a, 35b. Die Klemmfixierung der beiden Bandendabschnitte 35a, 35b erfolgt unabhängig voneinander. Die beiden Bandendabschnitte 35a, 35b sind nicht aneinander fixiert, sondern jeweils nur am Kolbenkörper 16.

Der Kolbenkörper 16 verfügt an mindestens einer Stelle seines peripheren Außenumfanges über einen Klemmbereich 44, an dem der Kolbenkörper 16 so ausgebildet ist, dass er die beiden Bandendabschnitte 35a, 35b unabhängig voneinander klemmend in der Aufnahmenut 25 festhalten kann. Dabei verfügt der Kolbenkörper 16 in dem Klemmbereich 44 über zwei in der Umfangsrichtung 25a der Aufnahmenut 25 zueinander benachbarte Klemmzonen 45a, 45b, die ausgebildet ist, um jeweils einen der Bandendabschnitte 35a, 35b kraftschlüssig festzuhalten.

Das Magnetband 35 hat über seine gesamte Länge hinweg zweckmäßigerweise eine konstante Breite "B". Diese Breite B ist in Achsrichtung der Längsachse 5 des Kolbens 4 bzw. zwischen den beiden Seitenflächen 39a, 39b gemessen. Das Magnetband 35 hat im Übrigen zweckmäßigerweise eine rechteckige Querschnittsform.

Die Breite B des Magnetbandes 35 ist geringer als der lichte Abstand A1 zwischen den beiden Nutflanken 33a, 33b der Aufnahmenut 25. Folglich ist das Magnetband 35 in denjenigen Bereichen der Aufnahmenut 25, in denen sich Abschnitte der Nutflanken 33a, 33b gegenüberliegen, mit einem geringen Spiel behaftet in der Aufnahmenut 25 aufgenommen.

Im Bereich der beiden Klemmzonen 45a, 45b verfügt der Kolbenkörper 16 hingegen über jeweils mindestens einen bezüglich einer der beiden Nutflanken 33a, 33b in Richtung zur gegenüberliegenden Nutflanke 33b, 33a vorstehenden Klemmvorsprung 46a, 47a; 46b, 47b, der eine lokale Verengung der Aufnahmenut 25 hervorruft. Durch die lokale Verengung wird erreicht, dass das Magnetband 35 an einer oder mehreren Stellen im Bereich seiner beiden Bandendabschnitte 35a, 35b in der Aufnahmenut 25 festgeklemmt ist und nicht aufklappen kann. Die Verengungsbereiche, die auch als Engstellen bezeichnet werden können, sind bei 48 durch Pfeile markiert.

Es besteht die Möglichkeit, in jeder Klemmzone 45a, 45b nur einen einzigen Klemmvorsprung vorzusehen, dessen Abstand zur gegenüberliegenden Nutflanke etwas geringer ist als die Breite B des Magnetbandes 35, sodass die Klemmung im Wesentlichen daraus resultiert, dass der einzige Klemmvorsprung in die zugewandte Seitenfläche 39a, 39b des Magnetbandes 35 eingedrückt wird.

Es besteht auch die Möglichkeit, in jeder Klemmzone 45a, 45b mehrere Klemmvorsprunge in der Umfangsrichtung 25a der Aufnahmenut 25 mit Abstand zueinander anzuordnen. Beispielsweise können dabei diese mehreren Klemmvorsprünge an nur einer und dabei an der gleichen Nutflanke 33a, 33b ausgebildet sein.

Es besteht ferner die Möglichkeit, in einer oder in beiden Klemmzonen 45a, 45b zwei sich in Achsrichtung der Längsachse 5 des Kolbens 4 gegenüberliegende Klemmvorsprünge an den beiden Nutflanken 33a, 33b vorzusehen, die zueinander ragen und eine Engstelle 48 zum Einklemmen des zugeordneten Bandendabschnittes 35a, 35b definieren. Dabei können pro Klemmzone 45a, 45b nur ein Paar oder mehrere Paare solcher sich gegenüberliegender Klemmvorsprünge vorhanden sein.

Eine besonders bevorzugte Ausgestaltung der beiden Klemmzonen 45a, 45b ist beim Ausführungsbeispiel realisiert und in der Zeichnung illustriert. Demnach verfügt der Kolbenkörper 16 in jeder der beiden Klemmzonen 45a, 45b über mehrere, in der Umfangsrichtung 25a der Aufnahmenut 25 mit Abstand zueinander angeordnete Klemmvorsprünge 46a, 47a; 46b, 47b, also über mehrere Klemmvorsprünge, die in der Umfangsrichtung der Aufnahmenut 25 versetzt zueinander angeordnet sind. Allerdings befinden sich die Klemmvorsprünge 46a, 47a; 46b, 47b in der jeweiligen Klemmzone 45a, 45b nicht jeweils an der gleichen Nutflanke 33a, 33b, sondern sind an unterschiedlichen Nutflanken 33a, 33b angeordnet. Exemplarisch ist in jeder Klemmzone 45a, 45b ein erster Klemmvorsprung 46a, 46b an der ersten Nutflanke 33a angeformt und ein diesbezüglich in der Umfangsrichtung 25a der Aufnahmenut 25 beabstandeter zweiter Klemmvorsprung 47a, 47b an der zweiten Nutflanke 33b. In dem einem jeweiligen Klemmvorsprung 46a, 47a; 46b, 47b gegenüberliegenden Bereich der jeweils anderen Nutflanke 33a, 33b befindet sich vorzugsweise kein Klemmvorsprung, dort ist die betreffende Nutflanke 33a, 33b als klemmvorsprunglos gestaltet.

Auf diese Weise ergeben sich pro Klemmzone 45a, 45b mehrere, in der Umfangsrichtung der Aufnahmenut 25 zueinander beabstandete Engstellen oder Verengungsbereiche 48 innerhalb der Aufnahmenut 25, die durch von einander entgegengesetzten Nutflanken 33a, 33b her in die Aufnahmenut 25 hineinragenden Klemmvorsprüngen 46a, 47a; 46b, 47b hervorgerufen werden.

Aus dieser Anordnung ergibt es sich, dass sich jeder in eine Klemmzone 45a, 45b hineingedrückter Bandendabschnitt 35a, 35b mit einer leichten Wellenlinie in der Umfangsrichtung 25a der Aufnahmenut 25 durch die jeweilige Klemmzone 45a, 45b hindurchschlängelt und dadurch wirksam festgeklemmt ist. Bei dieser Art der Klemmung ist es nicht erforderlich, dass der zwischen jedem Klemmvorsprung 46a, 47a; 46b, 47b und der gegenüberliegenden Nutflanke 33a, 33b gemessene lichte Abstand A2 kleiner ist als die Breite B des Magnetbandes 35. Dieser lichte Abstand A2 ist zweckmäßigerweise gleichgroß wie die Breite B Magnetbandes 35 oder kann sogar diesbezüglich etwas größer sein. Der klemmende Effekt resultiert hauptsächlich aus dem Umstand, dass das Magnetband 35 in jeder Klemmzone 45a, 45b derart mäanderartig verformt wird, dass es insbesondere auch in den zu den Klemmvorsprüngen 46a, 47a; 46b, 47b benachbarten Bereichen mit den Nutflanken 33a, 33b verspannt wird.

Der klemmende Effekt beruht hier maßgeblich darauf, dass die Bandendabschnitte 35a, 35b in den Klemmabschnitten 45a, 45b durch die alternierend an unterschiedlichen Nutflanken 33a, 33b befindlichen Klemmvorsprünge in eine mäanderformige oder wellenförmige oder zumindest gebogene Längsgestalt gezwungen werden und aufgrund der Elastizität des Magnetbandes 35 die Tendenz haben, sich in ihre lineare Ausgangsgestalt zurück zu verformen, sodass sie sich in der Aufnahmenut 25 quer zu deren Umfangsrichtung 25a verspannen.

Als vorteilhaft hat es sich erwiesen, wenn in der jeweiligen Klemmzone 45a, 45b der in der Längsrichtung des Kolbens 4 gemessene projizierte lichte Abstand A3 zwischen den beiden in der Umfangsrichtung 25a der Aufnahmenut 25 zueinander beabstandeten Klemmvorsprüngen 46a, 47a; 46b, 47b kleiner ist als die Breite B des Magnetbandes.

Um eine optimale Klemmung zu generieren, hat es sich außerdem als zweckmäßig erwiesen, in jeder Klemmzone 45a, 45b den in der Umfangsrichtung der Aufnahmenut gemessenen Abstand A4 zwischen den an unterschiedlichen Nutflanken 33a, 33b angeordneten Klemmvorsprüngen 46a, 47a; 46b, 47b so zu wählen, dass er mindestens so groß ist wie die Breite B des Magnetbandes und maximal die doppelte Breite B des Magnetbandes beträgt.

Es hat sich gezeigt, dass bereits zwei Klemmvorsprünge 46a, 47a; 46b, 47b pro Klemmzone 45a, 45b ausreichen, um den zugeordneten Bandendabschnitt 35a, 35b zuverlässig klemmend festzuhalten. Es können aber auch mehr als zwei Klemmvorsprünge pro Klemmzone vorgesehen werden.

Es genügt völlig, entlang des Umfanges der Aufnahmenut 25 nur einen einzigen Klemmbereich 44 der beschriebenen Art vorzusehen. Das Magnetband 35 ist bereits dann sicher in der Aufnahmenut 25 gehalten, wenn es lediglich an seinen beiden Bandendabschnitten 35a, 35b fixiert wird.

Für die Geschwindigkeit bei der Montage des Kolbens 4 kann es allerdings vorteilhaft sein, an mindestens einer in der Umfangsrichtung des Kolbenkörpers 16 zu dem Klemmbereich 44 beabstandeten Stelle einen weiteren Klemmbereich 44a des geschilderten Aufbaus vorzusehen. Dieser weitere Klemmbereich 44a kann dann alternativ zu dem erläuterten Klemmbereich 44 zur Fixierung der beiden Bandabschnitte 35a, 35b genutzt werden, wenn das Magnetband 35 mit entsprechender Position in die Aufnahmenut 25 eingelegt wird. Prinzipiell können auch noch mehr solcher Klemmbereiche entlang des Umfanges des Kolbenkörpers 16 verteilt vorhanden sein, jedoch wird man die Anzahl der Klemmbereiche möglichst gering halten, da sie das Einführen des Magnetbandes 35 aufgrund der erzielten Klemmwirkung grundsätzlich erschweren.

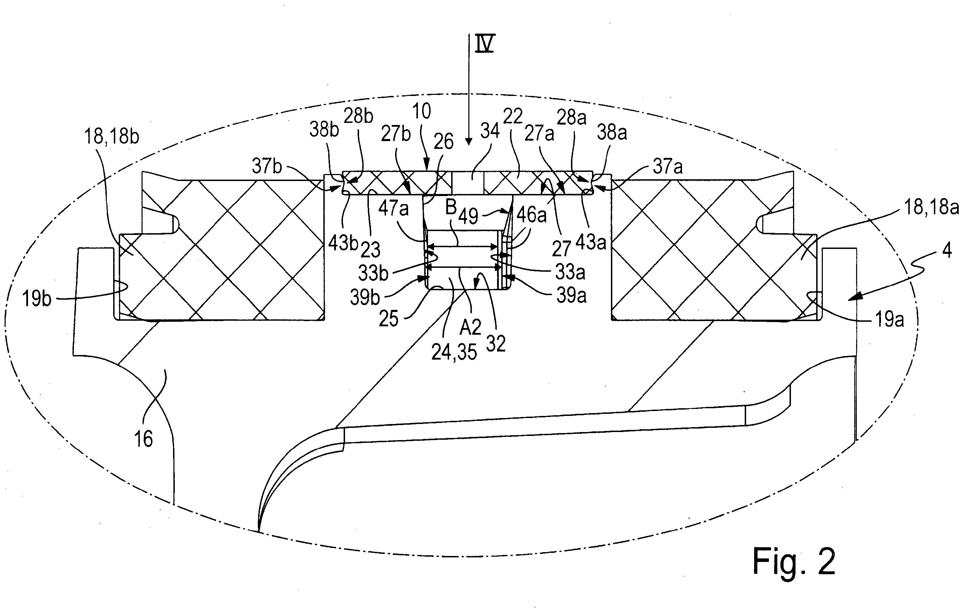

Die Klemmvorsprünge 46a, 47a; 46b, 47b können grundsätzlich beliebig gestaltet sein. Wichtig ist, dass sie eine lokale Verengung im Verlauf der Aufnahmenut 25 hervorrufen. Als besonders zweckmäßig hat sich eine Formgebung herausgestellt, bei der jeder Klemmvorsprung 46a, 47a; 46b, 47b gemäß Figuren 2 und 3 rippenförmig mit länglicher Gestalt ausgebildet ist und sich jeweils ausgehend vom Bereich des Nutgrundes 32 der Aufnahmenut 25 in Richtung zur radialen Nutöffnung 26 der Aufnahmenut 25 erstreckt. Vor allem in diesem Zusammenhang ist es vorteilhaft, wenn die Klemmvorsprünge 46a, 47a; 46b, 47b an ihrem der radialen Nutöffnung 26 zugewandten Endbereich eine nach radial außen und zur zugeordneten Nutflanke 33a, 33b hin verlaufende Abschrägung 49 aufweisen. Die Abschrägungen 49 bilden schräge Führungsflächen, die den jeweiligen Bandendabschnitt 35a, 35b zielsicher in die Aufnahmenut 25 hineinleiten, wenn selbiger bei der Montage von radial außen her mit einer drückenden Kraft beaufschlagt wird.

## Patentansprüche

1. Kolben für eine mit Fluid betreibbare Stellvorrichtung, insbesondere für einen fluidbetätigten Linearantrieb, mit einem einstückig ausgebildeten Kolbenkörper (16), der im Bereich seines radialen Außenumfanges eine zur Längsachse (5) des Kolbens (4) koaxiale ringförmige Haltevertiefung (23) mit zwei einander zugewandten seitlichen Vertiefungsflanken (28a, 28b) aufweist, in der ein eine Ringstruktur aufweisendes Führungsband (22) gehalten ist, das zwei in der Umfangsrichtung der Haltevertiefung (23) einander zugewandte Bandendabschnitte (22a, 22b) aufweist, **dadurch gekennzeichnet, dass** die beiden Vertiefungsflanken (28a, 28b) der Haltevertiefung (23) im Querschnitt betrachtet jeweils eine hinterschnittene Profilierung haben, wobei sie jeweils mit radialem Abstand zum Vertiefungsgrund (27) der Haltevertiefung (23) einen in Richtung zur gegenüberliegenden Vertiefungsflanke (28b, 28a) ragenden ringförmigen Haltevorsprung (38a, 38b) aufweisen, der formschlüssig mit dem zugewandten Seitenrand (37a, 37b) des Führungsbandes (22) in Eingriff steht, wobei das Führungsband (22) ein linear gefertigter, bei seiner anschließenden Montage am Kolbenkörper (16) zu einer Ringform gebogener Strangkörper ist.

2. Kolben nach Anspruch 1, **dadurch gekennzeichnet, dass** der Kolbenkörper (16) aus einem starren Material besteht, zweckmäßigerweise aus Metall.

3. Kolben nach Anspruch 1 oder 2, **dadurch gekennzeichnet, dass** die Haltevorsprünge (38a, 38b) unter lokaler Verformung des Führungsbandes (22) und unter Ausbildung eines formschlüssigen Eingriffes in den jeweils zugeordneten Seitenrand (37a, 37b) des Führungsbandes (22) eingedrückt sind.

4. Kolben nach einem der Ansprüche 1 bis 3, **dadurch gekennzeichnet, dass** das Führungsband (22) im noch nicht in der Haltevertiefung (23) montierten Ausgangszustand einen rechteckigen Querschnitt hat.

5. Kolben nach Anspruch 1 oder 2, **dadurch gekennzeichnet, dass** das Führungsband (22) an seinen beiden Seitenrändern (37a, 37b) jeweils eine vorgefertigte Eingriffskontur hat, mit der es mit dem jeweils zugeordneten Haltevorsprung (38a, 38b) formschlüssig in Eingriff steht.

6. Kolben nach einem der Ansprüche 1 bis 5, **dadurch gekennzeichnet, dass** das Führungsband (22) insgesamt über elastisch verformbare Eigenschaften verfügt.

7. Kolben nach einem der Ansprüche 1 bis 6, **dadurch gekennzeichnet, dass** die ringförmige Haltevertiefung (23) eine in dem Kolbenkörper (16) ausgebildete ringförmige Aufnahmenut (25) konzentrisch umschließt, die schmäler ist als die Haltevertiefung (23) und deren radial außen liegende Nutöffnung (26) in den Vertiefungsgrund (27) der Haltevertiefung (23) einmündet, wobei in der Aufnahmenut (25) eine ringförmig strukturierte, zur Positionserfassung nutzbare Permanentmagnetanordnung (24) aufgenommen ist, die von dem eine größere Breite aufweisenden Führungsband (22) radial außen abgedeckt ist.

8. Kolben nach einem der Ansprüche 1 bis 7, **dadurch gekennzeichnet, dass** im Bereich des radialen Außenumfanges des Kolbenkörpers (16) eine zur Längsachse (5) des Kolbens (4) koaxiale ringförmige Aufnahmenut (25) mit zwei einander zugewandten seitlichen Nutflanken (33a, 33b) ausgebildet ist, in der eine zur Positionserfassung nutzbare Permanentmagnetanordnung (24) aufgenommen ist, die aus einem zu einer Ringstruktur gebogenen elastischen permanentmagnetischen Magnetband (35) besteht, das zwei in der Umfangsrichtung der Aufnahmenut (25) einander zugewandte Bandendabschnitte (35a, 35b) aufweist und dessen Breite (B) geringer ist als der Abstand (A1) zwischen den Nutflanken (33a, 33b) der Aufnahmenut (25), wobei jeder der beiden Bandendabschnitte (35a, 35b) durch Klemmung in einer von zwei in der Umfangsrichtung der Aufnahmenut (25) zueinander benachbarten Klemmzonen (45a, 45b) der Aufnahmenut (25) gehalten ist, in denen der Kolbenkörper (16) jeweils mindestens einen unter lokaler Verengung der Aufnahmenut (25) bezüglich einer der Nutflanken (33a, 33b) vorstehenden und an die Seitenfläche 39a, 39b) des Magnetbandes (35) andrückenden Klemmvorsprung (46a, 47a; 46b, 47b) aufweist.

9. Kolben nach Anspruch 8, **dadurch gekennzeichnet, dass** der Kolbenkörper (16) in jeder Klemmzone (45a, 45b) der Aufnahmenut (25) mehrere, in der Umfangsrichtung (25a) der Aufnahmenut (25) mit Abstand zueinander angeordnete Klemmvorsprünge (46a, 47a; 46b, 47b) aufweist.

10. Kolben nach Anspruch 8 oder 9, **dadurch gekennzeichnet, dass** in jeder Klemmzone (45a, 45b) wenigstens zwei und zweckmäßigerweise genau zwei in der Umfangsrichtung (25a) der Aufnahmenut (25) mit Abstand benachbart zueinander angeordnete Klemmvorsprünge (46a, 47a; 46b, 47b) an unterschiedlichen Nutflanken (33a, 33b) angeordnet sind, wobei diesen Klemmvorsprüngen jeweils kein Klemmvorsprung an der anderen Nutflanke (33b, 33a) gegenüberliegt.

11. Kolben nach einem der Ansprüche 8 bis 10, **dadurch gekennzeichnet, dass** die Klemmvorsprünge (46a, 47a; 46b, 47b) jeweils rippenförmig mit länglicher Gestalt ausgebildet sind und sich jeweils ausgehend vom Bereich des Nutgrundes (32) der Aufnahmenut (25) in Richtung zur radialen Nutöffnung (26) der Aufnahmenut (25) erstrecken und/oder dass die Klemmvorsprünge (46a, 47a; 46b, 47b) in ihrem der radialen Nutöffnung (26) zugewandten Endbereich zur zugeordneten Nutflanke (33a, 33b) hin abgeschrägt sind.

12. Kolben nach einem der Ansprüche 8 bis 11, **dadurch gekennzeichnet, dass** das Magnetband (35) einen rechteckigen Querschnitt hat.

13. Mit Fluid betreibbare Stellvorrichtung, insbesondere fluidbetätigter Linearantrieb, mit einem Gehäuse (2), in dem ein Kolben (4) linear verschiebbar angeordnet ist, **dadurch gekennzeichnet, dass** der Kolben (4) nach einem der Ansprüche 1 bis 12 ausgebildet ist.

## Claims

1. Piston for an actuator, operable by fluid, in particular for a fluid-actuated linear drive, with a piston body (16) formed in one piece, which has in the area of its radial outer periphery an annular retaining recess (23) coaxial to the longitudinal axis (5) of the piston (4) and with two side recess edges (28a, 28b) facing one another, in which is held a guide band (22) with an annular structure and which has two band end sections (22a, 22b) facing one another in the circumferential direction of the retaining recess (23), **characterised in that** the two recess edges (28a, 28b) of the retaining recess (23), viewed in cross-section, each have an undercut profile, wherein they each have with radial clearance from the recess base (27) of the retaining recess (23) an annular retaining projection (38a, 38b) extending towards the opposite recess edge (28a, 28b), which is in positive engagement with the facing side edge (37a, 37b) of the guide band (22), wherein the guide band (22) is a continuous body, linear when produced and bent into an annular shape during subsequent fitting to the piston body (16).

2. Piston according to claim 1, **characterised in that** the piston body (16) is made of a rigid material, expediently of metal.

3. Piston according to claim 1 or 2, **characterised in that** the retaining projections (38a, 38b) are pressed into the respective assigned side edge (37a, 37b) of the guide band (22) under local deformation of the guide band (22) and with the creation of a form-fitting engagement.

4. Piston according to any of claims 1 to 3, **characterised in that** the guide band (22) has a rectangular cross-section in the original state, not yet fitted into the retaining recess (23).

5. Piston according to claim 1 or 2, **characterised in that** the guide band (22) has at each of its two side edges (37a, 37b) a prefabricated engagement contour, with which it engages positively with the respectively assigned retaining projection (38a, 38b).

6. Piston according to any of the preceding claims 1 to 5, **characterised in that** the guide band (22) as a whole has elastically deformable properties.

7. Piston according to any of claims 1 to 6, **characterised in that** the annular retaining recess (23) encompasses concentrically an annular locating slot (25) formed in the piston body (16) and which is narrower than the retaining recess (23) and has a radially outwards-lying slot opening (26) which opens out into the recess base (27) of the retaining recess (23), wherein there is accommodated in the locating slot (25) a permanent magnet assembly (24) with an annular structure which may be used for position determination and which is covered radially outwards by the guide band (22) which has a greater width.

8. Piston according to any of claims 1 to 7, **characterised in that** in the area of the radial outer periphery of the piston body (16) there is formed an annular locating slot (25), coaxial to the longitudinal axis (5) of the piston (4) and with two side slot edges (33a, 33b) facing one another, in which is accommodated a permanent magnet assembly (24) which may be used for position determination and is created by an elastic permanently magnetic magnetic tape (35) bent into an annular structure, having band end sections (35a, 35b) facing one another in the circumferential direction of the locating slot (25) and with a width which is less than the distance (A1) between the slot edges (33a, 33b) of the locating slot (25), wherein each of the two band end sections (35a, 35b) is held by clamping in one of two clamping zones (45a, 45b) of the locating slot (25), adjacent to one another in the circumferential direction of the locating slot (25), in which the piston body (16) has has in each case at least one clamping projection (46a, 47a; 46b, 47b) protruding relative to one of the slot edges (33a, 33b) under local narrowing of the locating slot (25) and pressing on the side face (39a, 39b) of the magnetic tape (35).

9. Piston according to claim 8, **characterised in that** the piston body (16), in each clamping zone (45a, 45b) of the locating slot (25), has several clamping projections (46a, 47a; 46b, 47b) spaced apart from one another in the circumferential direction (25a) of the locating slot (25).

10. Piston according to claim 8 or 9, **characterised in that** in each clamping zone (45a, 45b), at least two and expediently precisely two clamping projections (46a, 47a; 46b, 47b) are provided on different slot edges (33a, 33b), arranged adjacent to one another with clearance in the circumferential direction (25a) of the locating slot (25), wherein in each case no clamping projection lies opposite these clamping projections on the other slot edge (33a, 33b).

11. Piston according to any of claims 8 to 10, **characterised in that** the clamping projections (46a, 47a; 46b, 47b) are each rib-like with an elongated shape, in each case extending from the area of the slot base (32) of the locating slot (25) towards the radial slot opening (26) of the locating slot (25), and/or that the clamping projections (46a, 47a; 46b, 47b) are chamfered at their end section facing the radial slot opening (26) towards the assigned slot edge (33a, 33b).

12. Piston according to any of claims 8 to 11, **characterised in that** the magnetic tape (35) has a rectangular cross-section.

13. Actuator operable by fluid, in particular fluid-actuated linear drive, with a casing (2) in which a piston (4) is mounted with linear movement capability, **characterised in that** the piston (4) is designed according to any of claims 1 to 12.

## Revendications

1. Piston pour un dispositif de réglage pouvant fonctionner avec un fluide, en particulier pour un entraînement linéaire actionné par fluide, avec un corps de piston (16) réalisé d'un seul tenant, qui présente dans la zone de sa périphérie extérieure radiale un évidement de retenue (23) annulaire coaxial à l'axe longitudinal (5) du piston (4) avec deux flancs d'évidement (28a, 28b) latéraux tournés l'un vers l'autre, dans lequel une bande de guidage (22) présentant une structure annulaire est retenue, qui présente deux sections de bande (22a, 22b) tournées l'une vers l'autre dans la direction circonférentielle de l'évidement de retenue (23), **caractérisé en ce que** les deux flancs d'évidement (28a, 28b) de l'évidement de retenue (23), dans une vue dans la section transversale, ont respectivement un profilage contre-découpé, dans lequel ils présentent respectivement avec une distance radiale par rapport au fond d'évidement (27) de l'évidement de retenue (23), une saillie de retenue (38a, 38b) annulaire dépassant en direction du flanc d'évidement (28b, 28a) opposé, qui est en prise par complémentarité de forme avec le bord latéral (37a, 37b) faisant face de la bande de guidage (22), dans lequel la bande de guidage (22) est un corps étiré fabriqué linéairement, courbé lors de son montage subséquent au niveau du corps de piston (16) en une forme annulaire.

2. Piston selon la revendication 1, **caractérisé en ce que** le corps de piston (16) se compose d'un matériau rigide, de manière appropriée de métal.

3. Piston selon la revendication 1 ou 2, **caractérisé en ce que** les saillies de retenue (38a, 38b) sont enfoncées par déformation locale de la bande de guidage (22) et par formation d'une mise en prise par complémentarité de forme avec le bord latéral (37a, 37b) respectivement associé de la bande de guidage (22).

4. Piston selon l'une quelconque des revendications 1 à 3, **caractérisé en ce que** la bande de guidage (22) a, dans l'état de départ pas encore monté dans l'évidement de retenue (23), une section transversale rectangulaire.

5. Piston selon la revendication 1 ou 2, **caractérisé en ce que** la bande de guidage (22) a, à ses deux bords latéraux (37a, 37b), respectivement un contour de mise en prise préfabriqué, avec lequel elle est en prise par complémentarité de forme avec la saillie de retenue (38a, 38b) respectivement associée.

6. Piston selon l'une quelconque des revendications 1 à 5, **caractérisé en ce que** la bande de guidage (22) dispose en tout de propriétés élastiquement déformables.

7. Piston selon l'une quelconque des revendications 1 à 6, **caractérisé en ce que** l'évidement de retenue (23) annulaire entoure concentriquement une rainure de réception (25) annulaire réalisée dans le corps de piston (16), qui est plus étroite que l'évidement de retenue (23) et dont l'ouverture de rainure (26) située radialement à l'extérieur débouche dans le fond d'évidement (27) de l'évidement de retenue (23), dans lequel un agencement d'aimant permanent (24) structuré de manière annulaire, utilisable pour la détection de position, qui est recouvert radialement à l'extérieur par la bande de guidage (22) présentant une plus grande largeur, est reçu dans la rainure de réception (25).

8. Piston selon l'une quelconque des revendications 1 à 7, **caractérisé en ce qu'**une rainure de réception (25) annulaire coaxiale à l'axe longitudinal (5) du piston (4) avec deux flancs de rainure (33a, 33b) latéraux tournés l'un vers l'autre est réalisée dans la zone de la circonférence extérieure radiale du corps de piston (16), dans laquelle un agencement d'aimant permanent (24) utilisable pour la détection de position est reçu, qui se compose d'une bande magnétique (35) à aimant permanent élastique courbée en une structure annulaire, qui présente deux sections de bande (35a, 35b) tournées l'une vers l'autre dans la direction circonférentielle de la rainure de réception (25) et dont la largeur (B) est inférieure à la distance (A1) entre les flancs de rainure (33a, 33b) de la rainure de réception (25), dans lequel chacune des deux sections de bande (35a, 35b) est retenue par serrage dans une de deux zones de serrage (45a, 45b) de la rainure de réception (25) adjacentes l'une à l'autre dans la direction circonférentielle de la rainure de réception (25), dans lesquelles le corps de piston (16) présente respectivement au moins une saillie de serrage (46a, 47a; 46b, 47b) faisant saillie par resserrement local de la rainure de réception (25) par rapport à un des flancs de rainure (33a, 33b) et s'appliquant sur la surface latérale (39a, 39b) de la bande magnétique (35).

9. Piston selon la revendication 8, **caractérisé en ce que** le corps de piston (16) présente dans chaque zone de serrage (45a, 45b) de la rainure de réception (25) plusieurs saillies de serrage (46a, 47a; 46b, 47b) agencées l'une par rapport à l'autre à distance dans la direction circonférentielle (25a) de la rainure de réception (25).

10. Piston selon la revendication 8 ou 9, **caractérisé en ce que** dans chaque zone de serrage (45a, 45b), au moins deux et de manière appropriée exactement deux saillies de serrage (46a, 47a; 46b, 47b) agencées de manière adjacente l'une par rapport à l'autre à distance dans la direction circonférentielle (25a) de la rainure de réception (25) sont agencées au niveau de différents flancs de rainure (33a, 33b), dans lequel respectivement aucune saillie de serrage au niveau de l'autre flanc de rainure (33b, 33a) ne fait face à ces saillies de serrage.

11. Piston selon l'une quelconque des revendications 8 à 10, **caractérisé en ce que** les saillies de serrage (46a, 47a; 46b, 47b) sont réalisées respectivement en forme de nervure de forme allongée et s'étendent respectivement en partant de la zone du fond de rainure (32) de la rainure de réception (25) en direction de l'ouverture de rainure (26) radiale de la rainure de réception (25) et/ou que les saillies de serrage (46a, 47a ; 46b, 47b) sont chanfreinées dans leur zone d'extrémité tournée vers l'ouverture de rainure (26) radiale vers le flanc de rainure (33a, 33b) associé.

12. Piston selon l'une quelconque des revendications 8 à 11, **caractérisé en ce que** la bande magnétique (35) a une section transversale rectangulaire.

13. Dispositif de réglage pouvant fonctionner avec un fluide, en particulier entraînement linéaire actionné par fluide, avec un boîtier (2), dans lequel un piston (4) est agencé de manière linéairement mobile, **caractérisé en ce que** le piston (4) est réalisé selon l'une quelconque des revendications 1 à 12.
